# EUROPÄISCHE PATENTSCHRIFT

(11) **EP 1 335 956 B1**
(45) Veröffentlichungstag und Bekanntmachung des Hinweises auf die Patenterteilung: **14.12.2016**
(21) Anmeldenummer: 01992745.8
(22) Anmeldetag: 30.10.2001
(51) Int. Cl.: C09D 11/10, C09D 201/00, C08G 18/10, C08G 18/32, C08G 18/34, C08G 83/00

(54) **FLÜSSIGDRUCKFARBEN FÜR DEN FLEXO- UND/ODER TIEFDRUCK MIT HYPERVERZWEIGTEN POLYMEREN ALS BINDEMITTEL**
LIQUID PRINTING INKS FOR FLEXOGRAPHIC AND/OR INTAGLIO PRINTING COMPRISING HYPERBRANCHED POLYMERS AS THE VEHICLE
ENCRES D'IMPRIMERIE LIQUIDES POUR L'IMPRESSION PAR FLEXOGRAPHIE ET/OU HELIOGRAVURE CONTENANT UN POLYMERE FORTEMENT RAMIFIE EN TANT QUE LIANT

(30) Priorität: 31.10.2000 DE 10053862; 30.05.2001 DE 10126201
(43) Veröffentlichungstag der Anmeldung: 20.08.2003
(73) Patentinhaber: BASF SE, 67056 Ludwigshafen am Rhein (DE)
(72) Erfinder: BRUCHMANN, Bernd, 67251 Freinsheim (DE); BEDAT, Joelle, 67000 Strasbourg (FR); KACZUN, Jürgen, 67157 Wachenheim (DE); POGANIUCH, Peter, 67434 Neustadt (DE)
(86) Internationale Anmeldenummer: PCT/EP2001/012520
(87) Internationale Veröffentlichungsnummer: WO 2002/036697

(56) Entgegenhaltungen:
- EP-A- 0 451 657
- EP-A- 0 882 772
- WO-A-00/77070
- E. MALMSTRÖM, A. HULT: "Hyperbranched Polymers: A review", J.M.S. REV. MACROMOL. CHEM. PHYS., vol. C37, no. 3, 1997, pages 555-579,

## Beschreibung

Die vorliegende Erfindung betrifft Flüssigdruckfarben für den Flexo- und/oder Tiefdruck aus Lösemittel, Farbmittel, ggf. Zusatzstoffen, sowie mindestens einem funktionelle Gruppen aufweisenden hyperverzweigten Polymeren als Bindemittel. In einem zweiten Aspekt betrifft die Erfindung Drucklacke zum Grundieren von unbedruckten oder zum Überlackieren von bedruckten Bedruckstoffen aus Lösemittel, ggf. Zusatzstoffen, sowie mindestens einem funktionelle Gruppen aufweisenden hyperverzweigten Polymeren als Bindemittel. Die Erfindung betrifft weiterhin die Verwendung von funktionelle Gruppen aufweisenden hyperverzweigten Polymeren zur Herstellung von Druckfarben oder Drucklacken.

Bei den sogenannten mechanischen Druckverfahren wie Offsetdruck, Hochdruck, Flexodruck oder Tiefdruck wird die Druckfarbe durch Kontakt einer mit Druckfarbe versehenen Druckplatte oder Druckform mit dem Bedruckstoff auf den Bedruckstoff übertragen. Druckfarben für diese Anwendungen umfassen üblicherweise Lösemittel, Farbmittel, Bindemittel sowie ggf. verschiedene Additive. Bindemittel dienen zur Bildung des Farbfilms und der Verankerung der Bestandteile wie beispielsweise Pigmente oder Füllstoffe im Farbfilm. Je nach Konsistenz enthalten Druckfarben für diese Anwendungen üblicherweise zwischen 10 und 50 Gew. % Bindemittel. Die geschilderten Druckverfahren eignen sich insbesondere zum Drucken von großen Auflagen bzw. großen Stückzahlen. Auflagen von mehreren 100 000 Exemplaren sind keine Seltenheit. Neben den verschiedensten technischen Anforderungen müssen Druckfarben für diese Anwendungen daher auch sehr preisgünstig sein.

Drucklacke werden entweder als Grundierung auf den Bedruckstoff aufgetragen (so genannte "primer") oder nach dem Druckvorgang als Überzug auf den bedruckten Bedruckstoff aufgetragen. Drucklacke werden beispielsweise zum Schutz des Druckbildes, zur Verbesserung der Haftung der Druckfarbe auf dem Bedruckstoff oder zu ästhetischen Zwecken eingesetzt. Die Auftragung erfolgt üblicherweise in-line mittels eines Lackierwerkes an der Druckmaschine. Drucklacke enthalten kein Farbmittel, sind aber abgesehen davon im Regelfalle ähnlich wie Druckfarben zusammengesetzt.

Druckfarben für mechanische Druckverfahren umfassen so genannte pastöse Druckfarben mit hoher Viskosität für den Offset- und Hochdruck sowie so genannte Flüssigdruckfarben mit vergleichsweise niedriger Viskosität für den Flexo- und Tiefdruck.

Für pastöse Druckfarben werden als Lösemittel meist hoch siedende Mineralöle eingesetzt. Als Bindemittel kommen häufig Naturstoffe oder modifizierte Naturstoffe zum Einsatz, wie beispielsweise trocknende pflanzliche Öle oder Naturharze wie Kolophoniumharze.

Für Flüssigdruckfarben werden niedrig viskose und vergleichsweise niedrig siedende Lösemittel wie beispielsweise Ethanol, Wasser oder Toluol eingesetzt. Als Bindemittel werden vorzugsweise synthetisch hergestellte Polymere wie beispielsweise Nitrocellulose, Polyamide, Polyvinylbutyral oder Polymere eingesetzt. Weitere Einzelheiten sind beispielsweise in ""Printing Inks" - Ullmann's Encyclopedia of Industrial Chemistry, Sixth Edition, 1999 Electronic Release" offenbart.

Eine wichtige Anwendung von Flüssigdruckfarben ist der industrielle Verpackungsdruck. Zur Herstellung von Verpackungsmitteln wie beispielsweise Kartonagen, Tragetaschen, Schwersäcken, Gefriergutverpackungen oder Geschenkpapieren werden eine Vielzahl unterschiedlichster Bedruckstoffe eingesetzt. Beispiele für derartige Bedruckstoffe sind Papier, Karton, Pappe, Wellpappe, Folien aus Polymeren wie beispielsweise Polyethylen, Polypropylen, Polyamid oder Polyethylenterephthalat, Metallfolien wie beispielsweise Aluminiumfolien, sowie außerdem Verbundverpackungen, die aus mehreren Schichten verschiedener Materialien bestehen, beispielsweise solche aus PET- und Aluminiumfolien.

Beim Drucken auf nicht saugenden Bedruckstoffen wie beispielsweise Polymer- oder Metallfolien kann die Druckfarbe naturgemäß nicht in den Bedruckstoff eindringen, sondern nach dem Abdampfen des Lösungsmittels verbleibt ein getrockneter Film auf dem Bedruckstoff. Druckfarben für derartige Bedruckstoffe müssen daher sehr gute filmbildende Eigenschaften sowie eine ganz besonders gute Abrieb-, Knitter-, Kratz- und Haftfestigkeit aufweisen, damit sich der Druckfilm bei mechanischer Beanspruchung nicht wieder vom Untergrund ablöst. Druckfarben mit konventionellen Bindemitteln weisen auf vielen Bedruckstoffen keine ausreichende Haftfestigkeit auf, so dass Haftvermittler wie bestimmte Silane oder Titanate zugegeben werden müssen. Beispielhaft sei hier auf US 5,646,200 verwiesen. Aus ökonomischen Gründen sowie zur Vereinfachung der Rezeptur wäre es wünschenswert, auf diesen Zusatz verzichten zu können. Außerdem ist es generell wünschenswert, den Anteil niedermolekularer und damit prinzipiell migrationsfähiger Komponenten der Druckfarbe möglichst klein zu halten. Weiterhin ist selbst bei Zusatz von Haftvermittlern die Haftung nicht auf allen Bedruckstoffen befriedigend, so dass hier Verbesserungsbedarf besteht.

Dendrimere, Arborole, Starburst Polymers oder hyperverzweigte Polymere sind Bezeichnungen für polymere Strukturen, die sich durch eine verzweigte Struktur und eine hohe Funktionalität auszeichnen. Bei Dendrimeren handelt es sich um molekular und strukturell einheitliche Makromoleküle mit einem hoch symmetrischen Aufbau. Sie werden in vielstufigen Synthesen aufgebaut und sind dementsprechend sehr teuer.

Im Gegensatz dazu sind hyperverzweigte Polymere sowohl molekular wie strukturell uneinheitlich. Sie weisen Äste unterschiedlicher Länge und Verzweigung auf. Zur Synthese hyperverzweigter Polymerer eigenen sich insbesondere so genannte ABₓ-Monomere. Diese weisen zwei verschiedene funktionelle Gruppen A und B auf, die unter Bildung einer Verknüpfung miteinander reagieren können. Die funktionelle Gruppe A ist dabei nur einmal pro Molekül enthalten und die funktionelle Gruppe B zweifach oder mehrfach. Durch die Reaktion der besagten ABₓ-Monomere miteinander entstehen unvernetzte Polymere mit regelmäßig angeordneten Verzweigungstellen. Die Polymere weisen an den Kettenenden fast ausschließlich B-Gruppen auf. Nähere Einzelheiten sind beispielsweise in J.M.S. - Rev. Macromol. Chem. Phys., C37(3), 555 - 579 (1997) offenbart.

Dendrimere Amine sind als Hilfsmittel wie Dispergierhilfsmittel oder Stabilisatoren für Ink-Jet-Tinten vorgeschlagen worden, wie offenbart von US 5,120,361, US 5,254,159, US 5,266,106, WO 97/03137, WO 97/49774 oder WO 98/36001. US 6,096,801 offenbart die Verwendung von Dendrimeren als Dispergierhilfsmittel für Pigmentpräparationen bestimmter organischer Pigmente, die ihrerseits als Farbmittel für Druckfarben eingesetzt werden können. Angesichts der geringen Verfügbarkeit und des hohen Preises kommen aber nur geringe Mengen von Dendrimeren bei derartigen Anwendungen zum Einsatz.

EP-A 899 286 offenbart strahlungshärtbare Zusammensetzungen aus Monomeren bzw. Reaktivverdünnern und Präpolymeren, bei denen konventionelle vernetzbare Präpolymere zur Verringerung der Viskosität der Zusammensetzung durch bestimmte vernetzbare Dendrimere mit olefinischen Endgruppen in Kombination mit langkettigen Alkyl-, Polyether- oder Polyester-Endgruppen ersetzt sind, sowie die Verwendung derartiger strahlungshärtbarer Zusammensetzungen Geänderte Beschreibungsseiten - Reinschrift

zur Herstellung zur Herstellung von Beschichtungen, Klebstoffen oder strahlungshärtbaren Druckfarben.

WO 96/13558 offenbart strahlungshärtbare Zusammensetzungen aus Monomeren und ungesättigten Polyestern, wobei als Polyester ein hyperverzweigter Polyester mit ungesättigten Funktionalitäten als Endgruppen eingesetzt wird, sowie die Verwendung derartiger strahlungshärtbarer Zusammensetzungen zur Herstellung von Beschichtungen wie Autolackierungen, Möbellackierungen oder strahlungshärtbarer Druckfarben. UV-härtbare Druckfarben umfassen keine Lösemittel, können jedoch nur auf speziell ausgerüsteten Druckmaschinen verdruckt werden und verursachen somit zusätzliche Investitionskosten. Weiterhin ist bei UV-Farben die Haftung des Farbfilms auf wichtigen Bedruckstoffen wie Polyester, Polyamid oder Polypropylen häufig unbefriedigend, so dass viele Anwender Flüssigdruckfarben den Vorzug geben.

Aufgabe der Erfindung war es, verbesserte Druckfarben, insbesondere verbesserte Flüssigdruckfarben bereitzustellen, die auch ohne Zusatz von Haftvermittlern eine sehr gute Haftung auf den Bedruckstoffen aufweisen, und die einfach und billig herzustellen sind. Aufgabe der Erfindung war es insbesondere, verbesserte Flüssigdruckfarben zum Bedrucken von nicht saugenden Bedruckstoffen wie Kunststoff- oder Metallfolien bereitzustellen. Aufgabe der Erfindung war es weiterhin, verbesserte Drucklacke zum Grundieren unbedruckten oder Überlackieren von bedruckten Bedruckstoffen, insbesondere von nicht saugenden Bedruckstoffen, bereitzustellen.

Überraschenderweise wurde gefunden, dass dieses Ziel durch die Verwendung von funktionelle Gruppen aufweisenden hyperverzweigten Polymeren erreicht werden kann.

Dementsprechend wurden Flüssigdruckfarben für den Flexo- und/oder Tiefdruck aus Lösemittel, Farbmittel, ggf. Zusatzstoffen, sowie mindestens einem funktionelle Gruppen aufweisenden hyperverzweigten Polymeren als Bindemittel gefunden. Außerdem wurden Drucklacke zum Grundieren von unbedruckten oder Überlackieren von bedruckten Bedruckstoffen aus Lösemittel, ggf. Zusatzstoffen, sowie mindestens einem funktionelle Gruppen aufweisenden hyperverzweigten Polymeren als Bindemittel gefunden. Weiterhin wurde die Verwendung von funktionelle Gruppen aufweisenden hyperverzweigten Polymeren zur Herstellung von Druckfarben und Drucklacken, insbesondere als Bindemittel von Druckfarben und Drucklacken gefunden.

Gegenstand der Erfindung ist eine Flüssigdruckfarbe für den Flexo- und/oder Tiefdruck, mindestens umfassend, jeweils bezogen auf die Summe aller Bestandteile, 50-80 Gew.% eines Lösemittels oder eines Gemischs verschiedener Lösemittel, 5-25 Gew.-% mindestens eines Farbmittels, 5-30 Gew.-% eines oder mehrerer Bindemittel sowie optional 0-20 Gew.-% weiterer Zusatzstoffe, dadurch gekennzeichnet, dass es sich bei mindestens einem der Bindemittel um ein molekular und strukturell uneinheitliches hyperverzweigtes Polymeres handelt, welches funktionelle Gruppen aufweist, ausgewählt aus hyperverzweigten Polyurethanen, hyperverzweigten Polyharnstoffpolyurethanen, hyperverzweigten Polyharnstoffen, hyperverzweigten Polyethern, hyperverzweigten Polyaminen, hyperverzweigten Polyamiden, hyperverzweigten Polyesteramiden und hyperverzweigten Polyetheramiden.

Gegenstand der Erfindung ist weiterhin eine Flüssigdruckfarbe für den Flexo- und/oder Tiefdruck, mindestens umfassend, jeweils bezogen auf die Summe aller Bestandteile, 50-80 Gew.% eines Lösemittels oder eines Gemischs verschiedener Lösemittel, ausgewählt aus Kohlenwasserstoffen, Alkoholen, substituierten Alkoholen, Ethylacetat, Isopropylacetat, n-Propylacetat, n-Butylacetat und deren Gemischen, Wasser und Wasser enthaltenden Lösungsmittelgemischen, 5-25 Gew.-% mindestens eines Farbmittels, 5-30 Gew.-% eines oder mehrerer Bindemittel sowie optional 0-20 Gew.-% weiterer Zusatzstoffe, dadurch gekennzeichnet, dass es sich bei mindestens einem der Bindemittel um einen molekular und strukturell uneinheitlichen hyperverzweigten Polyester handelt, welcher funktionelle Gruppen aufweist.

Gegenstand der Erfindung ist auch ein Drucklack zum Grundieren von unbedruckten oder Überlackieren von bedruckten Bedruckstoffen, mindestens umfassend ein Lösemittel oder ein Gemisch verschiedener Lösemittel,ausgewählt aus Xylol, Alkoholen, substituierten Alkoholen, Ethylacetat, Isopropylacetat, n-Propylacetat, n-Butylacetat und deren Gemischen, Wasser und Wasser enthaltenden Lösungsmittelgemischen, ein oder mehrere Bindemittel sowie optional weitere Zusatzstoffe, dadurch gekennzeichnet, dass es sich bei mindestens einem der Bindemittel um ein molekular und strukturell uneinheitliches hyperverzweigtes Polymeres handelt, welches funktionelle Gruppen aufweist.

Zu der Erfindung ist im Einzelnen Folgendes auszuführen:
Die vorliegende Erfindung wird mit hyperverzweigten Polymeren im eigentlichen Sinne, d.h. molekular und strukturell uneinheitlichen Polymeren ausgeführt.

Funktionelle Gruppen aufweisende hyperverzweigte Polymere können in prinzipiell bekannter Art und Weise unter Verwendung von ABₓ-, bevorzugt AB₂-Monomeren synthetisiert werden. Die AB₂-Monomere können dabei einerseits vollständig in Form von Verzweigungen eingebaut sein, sie können als terminale Gruppen eingebaut sein, also noch zwei freie B-Gruppen aufweisen, und sie können als lineare Gruppen mit einer freien B-Gruppe eingebaut sein. Die erhaltenen hyperverzweigten Polymere weisen je nach dem Polymerisationsgrad eine mehr oder weniger große Anzahl von B-Gruppen, entweder terminal oder als Seitengruppen auf. Weitere Angaben zu hyperverzweigten Polymeren und deren Synthese sind beispielsweise in J.M.S. - Rev. Macromol. Chem. Phys., C37(3), 555 - 579 (1997) und der dort zitierten Literatur zu finden.

Die Auswahl von hyperverzweigten Polymeren zur Herstellung von Druckfarben ist prinzipiell nicht auf eine bestimmte Polymerklasse beschränkt. Der Fachmann trifft je nach den gewünschten Eigenschaften der Druckfarbe unter den prinzipiell möglichen Polymerklassen eine Auswahl. Erfindungsgemäß zur Herstellung von Druckfarben werden hyperverzweigte Polyester, hyperverzweigte Polyether, hyperverzweigte Polyurethane, hyperverzweigte Polyharnstoffpolyurethane, hyperverzweigte Polyharnstoffe, hyperverzweigte Polyamine, hyperverzweigte Polyamide, hyperverzweigte Polyetheramide sowie hyperverzweigte Polyesteramide erwiesen. Ganz besonders bevorzugt sind hyperverzweigte Polyurethane, hyperverzweigte Polyharnstoffpolyurethane, hyperverzweigte Polyether, hyperverzweigte Polyester und hyperverzweigte Polyesteramide, eingesetzt.

Durch Polymerisation von AB₂-Molekülen erhaltene hyperverzweigte und hochfunktionelle Polymere können prinzipiell als solche zur Herstellung von Druckfarben eingesetzt werden, vorausgesetzt, die im Zuge der jeweiligen Ausführungsform der Synthese erhaltenen funktionellen Gruppen sind für die gewünschte Anwendung geeignet. Die ursprünglich vorhandenen B-Gruppen können vorteilhaft, aber auch durch polymeranaloge Umsetzung mit dazu geeigneten Verbindungen umfunktionalisiert werden. Auf diese Art und Weise werden der jeweiligen Anwendung der Druckfarbe besonders angepasste Polymere zugänglich.

Beispiele für geeignete funktionelle Gruppen, die mittels geeigneter Reaktionspartner eingeführt werden können, umfassen insbesondere saure oder basische, H-Atome aufweisende Gruppen sowie deren Derivate wie -COOH, -COOR, -CONHR, -CONH₂, -OH, -SH, -NH₂, -NHR, -NR₂, -SO₃H, - SO₃R, -NHCOOR, -NHCONH₂, -NHCONHR, ohne dass die Aufzählung darauf beschränkt sein soll. Sofern grundsätzlich möglich, können die funktionellen Gruppen auch mit Hilfe geeigneter Säuren oder Basen in die entsprechenden Salze übergeführt werden. Bei den Resten R der besagten Gruppen handelt es sich im Regelfalle um geradkettige oder verzweigte Alkylreste oder um Arylreste, die auch noch weiter substituiert sein können. Beispielsweise handelt es sich um C₁ - C₈-Alkylreste oder um C₅ - C₁₂ Arylreste. Es können auch andere funktionelle Gruppen wie beispielsweise -CN oder -OR verwendet werden.

Die funktionellen Gruppen der hyperverzweigten Polymere können gegebenenfalls auch umfunktionalisiert werden. Zur Umfunktionalisierung eingesetzte Verbindungen können einerseits die gewünschte, neu einzuführende funktionelle Gruppe sowie eine zweite Gruppe enthalten, die mit den B-Gruppen des als Ausgangsmaterial verwendeten hyperverzweigten Polymers unter Bildung einer Bindung zur Reaktion befähigt ist. Ein Beispiel dafür ist die Umsetzung einer Isocyanat-Gruppe mit einer Hydroxycarbonsäure oder einer Aminocarbonsäure unter Bildung einer Säurefunktionalität oder die Umsetzung einer OH-Gruppe mit Acrylsäureanhydrid unter Bildung einer reaktionsfähigen acrylischen Doppelbindung.

Es können aber auch monofunktionelle Verbindungen eingesetzt werden, mit der vorhandene Gruppen lediglich modifiziert werden. Beispielsweise können Alkylhalogenide zur Quarternisierung vorhandener primärer, sekundärer oder tertiärer Aminogruppen eingesetzt werden.

Die Umfunktionalisierung der hyperverzweigten Polymere kann vorteilhaft unmittelbar im Anschluss an die Polymerisationsreaktion oder in einer separaten Reaktion erfolgen.

Funktionelle Gruppen, die über ausreichend acide H-Atome verfügen, können durch Behandlung mit geeigneten Basen in die entsprechenden Salze übergeführt werden. Analog lassen sich funktionelle basische Gruppen mit geeigneten Säuren in die entsprechenden Salze überführen. Dadurch lassen sich beispielsweise wasserlösliche oder wasserdispergierbare hyperverzweigte Polymere erhalten.

Es können auch hyperverzweigte Polymere erzeugt werden, die verschiedenartige Funktionalitäten aufweisen. Dies kann beispielsweise durch Umsetzung mit einem Gemisch verschiedener Verbindungen zur Umfunktionalisierung erfolgen, oder auch dadurch, dass man nur einen Teil der ursprünglich vorhandenen funktionellen Gruppen umsetzt.

Weiterhin lassen sich gemischt funktionelle Verbindungen dadurch erzeugen, indem man Monomere vom Typ ABC oder AB₂C für die Polymerisation einsetzt, wobei C eine funktionelle Gruppe darstellt, die unter den gewählten Reaktionsbedingungen mit A oder B nicht reaktiv ist.

Erfindungsgemäß werden die funktionelle Gruppen aufweisenden hyperverzweigten Polymere zur Herstellung von Druckfarben oder Drucklacken verwendet. Sie sind insbesondere als Bindemittel geeignet.

Die erfindungsgemäßen Flüssigdruckfarben für den Flexo- und Tiefdruck umfassen mindestens ein Lösemittel oder ein Gemisch verschiedener Lösemittel, mindestens ein Farbmittel, ein oder mehrere Bindemittel sowie optional weitere Zusatzstoffe.

Die erfindungsgemäßen Drucklacke zum Grundieren von unbedruckten oder zum Überlackieren von bedruckten Bedruckstoffen umfassen mindestens ein Lösemittel oder ein Gemisch verschiedener Lösemittel, ein oder mehrere Bindemittel sowie optional weitere Zusatzstoffe.

Bei mindestens einem der Bindemittel handelt es sich um ein funktionelle Gruppen aufweisendes hyperverzweigtes Polymer. Es können auch mehrere unterschiedliche hyperverzweigte Polymere als Bindemittel eingesetzt werden.

Polymerisationsgrad, Molmasse sowie Art und Anzahl funktioneller Gruppen können vom Fachmann je nach der vorgesehenen Anwendung gewählt werden.

Insbesondere bewährt als funktionelle Gruppen haben sich -COOH, -COOR, -CONH₂, -OH, - NH₂, -NHR oder -SO₃H. OH-terminierte oder COOH-terminierte hyperverzweigte Polymere haben sich als ganz besonders vorteilhaft für Verpackungsdruckfarben zum Bedrucken von Polyolefin-, PET- oder Polyamid-Folien erwiesen. Besonders vorteilhaft für diesen Anwendungszweck ist der Einsatz von hyperverzweigten Polymeren, die sowohl OH- als auch COOH-Gruppen umfassen.

Die verwendeten hyperverzweigten Polymere weisen im Regelfalle im Mittel mindestens 4 funktionelle Gruppen auf. Die Zahl der funktionellen Gruppen ist prinzipiell nicht nach oben beschränkt. Allerdings weisen Produkte mit einer zu hohen Anzahl von funktionellen Gruppen häufig unerwünschte Eigenschaften auf, wie beispielsweise schlechte Löslichkeit oder eine sehr hohe Viskosität. Daher weisen die erfindungsgemäß verwendeten hyperverzweigten Polymere im Regelfalle nicht mehr als im Mittel 100 funktionelle Gruppen auf. Bevorzugt weisen die hyperverzweigten Polymere 4 bis 30 und besonders bevorzugt 4 bis 20 funktionelle Gruppen auf.

Die Molmassen der erfindungsgemäß verwendeten hyperverzweigten Polymere richten sich nach der jeweiligen Polymerklasse sowie nach der jeweiligen Anwendung und werden vom Fachmann entsprechend ausgewählt. Bewährt haben sich aber Produkte mit einem Gewichtsmittel M_{W} von 500 bis 50 000 g/mol, bevorzugt 1000 bis 20 000 g/mol, und besonders bevorzugt von 1000-10000 g/mol.

Die hyperverzweigten Polymere können im Gemisch mit anderen Bindemitteln eingesetzt werden, wobei vorausgesetzt wird, dass durch die Mischung keine unerwünschten Effekte, wie beispielsweise Ausfällungen eintreten. Beispiele für weitere Bindemittel für Flüssigdruckfarben umfassen Polyvinylbutyral, Nitrocellulose, Polyamide, Polyacrylate oder Polyacrylat-Copolymere. Besonders vorteilhaft hat sich der Einsatz der hyperverzweigten Polymere im Gemisch mit Nitrocellulose erwiesen. Als Bindemittel werden üblicherweise 5- 30 Gew. % bezüglich der Summe alle Bestandteile eingesetzt.

Lösemittel dienen zum Lösen der Bindemittel, sie dienen aber auch zur Einstellung wichtiger Eigenschaften wie der Viskosität oder zur Einstellung der Trocknungsgeschwindigkeit. Die Art des Lösemittels richtet sich nach dem jeweiligen Verwendungszweck der Druckfarbe und als Lösemittel oder als Bestandteile von Lösemittelmischungen können prinzipiell in bekannter Art und Weise die für Flüssigdruckfarben üblichen Lösemittel eingesetzt werden. Dies Auswahl ist lediglich dadurch beschränkt, dass das jeweils eingesetzte hyperverzweigte Polymer im Lösemittel eine ausreichende Löslichkeit aufweisen muss. Beispiele für derartige Lösemittel bzw. Komponenten von Lösemittelgemischen umfassen Kohlenwasserstoffe wie Toluol oder Xylol, Alkohole wie beispielsweise Ethanol, 1-Propanol, 2-Propanol, Ethylenglykol, Propylenglykol, Diethylenglykol, substituierte Alkohole wie beispielsweise Ethoxypropanol, Ester wie beispielsweise Ethylacetat, Isopropylacetat, n-Propyl oder n-Butylacetat. Es können auch Gemische verschiedener Lösemittel eingesetzt werden. Als Lösungsmittel ist weiterhin Wasser oder ein Wasser enthaltenes Lösemittelgemisch prinzipiell geeignet. Je nach Art der Druckfarbe werden üblicherweise 50 bis 80 Gew.% Lösemittel bezüglich der Summe aller Bestandteile eingesetzt.

Als Farbmittel können die üblichen Farbstoffe, insbesondere übliche Pigmente eingesetzt werden. Beispiele sind anorganische Pigmente wie beispielsweise Titandioxid-Pigmente oder Eisenoxidpigmente, Interferenzpigmente, Ruße, Metallpulver wie insbesondere Aluminium, Messing oder Kupferpulver, sowie organische Pigmente wie Azo-, Phthalocyanin- oder Isoindolin-Pigmente. Es können selbstverständlich auch Gemische verschiedener Farbstoffe oder Farbmittel eingesetzt werden sowie außerdem lösliche organische Farbstoffe. Es werden üblicherweise 5 bis 25 Gew.% Farbmittel bezüglich der Summe aller Bestandteile eingesetzt.

Drucklacke weisen naturgemäß keine Farbmittel auf.

Die erfindungsgemäßen Druckfarben bzw. Drucklacke können optional weitere Additive und Hilfsstoffe umfassen. Beispiele für Additive und Hilfsstoffe sind Füllstoffe wie Calciumcarbonat, Aluminiumoxidhydrat oder Aluminium- bzw. Magnesiumsilikat. Wachse erhöhen die Abriebfestigkeit und dienen der Erhöhung der Gleitfähigkeit. Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden. Weichmacher dienen der Erhöhung der Elastizität des getrockneten Films. Beispiele sind Phthalsäureester wie Dibutylphthalat, Diisobutylphthalat, Dioctylphthalat, Citronensäureeseter oder Ester der Adipinsäure. Zum Dispergieren der Pigmente können Dispergierhilfsmittel eingesetzt werden. Bei den erfindungsgemäßen Flüssigdruckfarben bzw. Drucklacken kann vorteilhaft auf Haftvermittler verzichtet werden, ohne dass die Verwendung von Haftvermittlern damit ausgeschlossen sein soll. Die Gesamtmenge aller Additive und Hilfsstoffe übersteigt üblicherweise nicht 20 Gew. % bezüglich der Summe aller Bestandteile und beträgt bevorzugt 0 - 10 Gew. %.

Die Herstellung der erfindungsgemäßen Flüssigdruckfarben kann in prinzipiell bekannter Art und Weise durch intensives Vermischen bzw. Dispergieren der Bestandteile in üblichen Apparaturen wie beispielsweise Dissolvern, Rührwerkskugelmühlen oder einem Dreiwalzenstuhl erfolgen. Vorteilhaft wird zunächst eine konzentrierte Pigmentdispersion mit einem Teil der Komponenten hergestellt, die später mit weiteren Bestandteilen und weiterem Lösemittel zur fertigen Druckfarbe weiter verarbeitet wird.

Die erfindungsgemäßen Flüssigdruckfarben bzw. Drucklacke weisen gegenüber den entsprechenden Produkten mit konventionellen Bindemitteln eine deutlich verbesserte Haftung insbesondere auf nicht saugenden Bedruckstoffen wie Metallfolien oder Kunststofffolien auf, sowohl beim Konter- wie beim Frontaldruck. Der Zusatz von Haftvermittlern ist im Regelfalle nicht erforderlich. Aufgrund dieser Eigenschaften eignen sie sich auch hervorragend zum Herstellen von Verbundverpackungen.

Die Verwendung von hyperverzweigten, funktionelle Gruppen aufweisenden Polymeren ist nicht auf Flüssigdruckfarben beschränkt. Selbstverständlich können die funktionelle Gruppen aufweisenden hyperverzweigten Polymere auch zur Herstellung von pastösen Druckfarben beispielsweise für den Offset-, Hoch- oder Siebdruck verwendet werden. Hierfür werden in prinzipiell bekannter Art und Weise anstelle der niedrig siedender Lösemittel hochsiedende Lösemittel wie beispielsweise Mineralöle oder pflanzliche Öle wie beispielsweise Sojaöl eingesetzt.

Die folgenden Beispiele sollen die Erfindung näher erläutern, ohne dass dadurch deren Umfang eingeschränkt wird:
Für die Beispiele wurden die folgenden hyperverzweigten Polymere eingesetzt:

### Polymer 1: Hyperverzweigtes Polyharnstoff-polyurethan aus Hexamethylendiisocyanat (HDI) und Diethanolamin (DEA), OH-terminiert

672 g HDI, gelöst in 672 g Dimethylacetamid (DMAc), wurden unter Stickstoffbedeckung vorgelegt und auf 0°C abgekühlt. Bei dieser Temperatur wurde anschließend unter gutem Rühren eine Lösung aus 422 g Diethanolamin in 422 g DMAc innerhalb von 120 min zugegeben. Nach der Zugabe wurde die Reaktionslösung auf 50°C erwärmt und die Abnahme des NCO-Gehaltes titrimetrisch verfolgt. Bei Erreichen eines NCO-Gehaltes von 3,4 Gew.% wurde auf 20°C abgekühlt, nochmals 162 g Diethanolamin, gelöst in 162 g DMAc, zugesetzt, und 30 min nachgerührt. Die Reaktionslösung wurde anschließend am Rotationsverdampfer im Vakuum vom Lösemittel befreit. Das Reaktionsprodukt wies folgende Parameter auf:
Mittlere Molmasse calc.: 1840 g/mol
Mittlere Funktionalität: ca. 9 OH

### Polymer 2: Hyperverzweigtes Polyharnstoff-polyurethan aus Hexamethylendiisocyanat (HDI) und Diisopropanolamin (DIIPA), OH-terminiert

672 g HDI, gelöst in 672 g trockenem Tetrahydrofuran (THF), wurden unter Stickstoffbedeckung vorgelegt und auf 0°C abgekühlt. Bei dieser Temperatur wurde unter gutem Rühren eine Lösung aus 532 g DIIPA in 532 g THF innerhalb von 60 min zugegeben. Nach der Zugabe wurde die Reaktionsmischung auf 50°C erwärmt und die Abnahme des NCO-Gehaltes titrimetrisch verfolgt. Bei Erreichen eines NCO-Gehaltes von 2,2 Gew.% wurde auf 20°C abgekühlt, nochmals 180 g DIIPA, gelöst in 180 g THF, zugegeben und 30 min nachgerührt. Die Reaktionslösung wurde anschließend am Rotationsverdampfer im Vakuum vom Lösemittel befreit. Das Reaktionsprodukt wies folgende Parameter auf:
Mittlere Molmasse calc.: 1037 g/mol
Mittlere Funktionalität: ca. 6 OH

### Polymer 3: Hyperverzweigtes Polyurethan aus Isophorondiisocyanat (IPDI), Trimethylolpropan (TMP) und ß-Alanin, COOH-terminiert

1000 g IPDI wurden unter Stickstoffbedeckung vorgelegt und innerhalb 1 min 300g TMP, gelöst in 1300 g Ethylacetat, unter gutem Rühren zugegeben. Nach Zudosierung von 0,2 g Dibutylzinn-dilaurat wurde die Reaktionsmischung bei 50°C gerührt und die Abnahme des NCO-Gehaltes titrimetrisch verfolgt. Bei Erreichen eines NCO-Ge-haltes von 4,2 Gew.% wurden 75g Tosylisocyanat als Stopper zugesetzt. Es wurd noch 1 h nachgerührt und anschliessend das Lösemittel am Rotationsverdampfer entfernt. Das Reaktionsprodukt wies eine mittlere Funktionalität bezüglich NCO von 7 auf.

400g dieses NCO-Gruppen enthaltenden Reaktionsproduktes wurden in 400 g trockenem Aceton gelöst und auf 50°C erwärmt. Anschließend wurde eine Mischung bestehend aus 16 g NaOH in 160 g Wasser und 36 g ß-Alanin in 80 g Aceton zugegeben. Nach der Zugabe fiel ein Feststoff aus. Die Suspension wurde noch 30 min bei 50°C gerührt und anschließend das Lösemittelgemisch am Rotationsverdampfer im Vakuum entfernt. Der Rückstand wurde in 2000 ml Wasser gelöst und mit verdünnter Salzsäure neutralisiert. Das ausgefallene Endprodukt wurde abgesaugt und im Vakuum getrocknet.
Mittlere Molmasse calc.: 3758 g/mol
Mittlere Funktionalität: ca. 7 COOH

### Polymer 4: Hyperverzweigtes Polyurethan aus Isophorondiisocyanat (IPDI), Trimethylolpropan (TMP), HDI-Polymer und ß-Alanin, COOH-terminiert

500 g IPDI wurden unter Stickstoffbedeckung vorgelegt und innerhalb 1 min 150g TMP, gelöst in 650 g Ethylacetat, unter gutem Rühren zugegeben. Nach Zudosierung von 0,2 g Dibutylzinndilaurat wurde die Reaktionsmischung bei 50°C gerührt und die Abnahme des NCO-Gehaltes titrimetrisch verfolgt. Bei Erreichen eines NCO-Ge-haltes von 5,8 Gew.% wurden 172g BASONAT HI 100 (Polyisocyanat auf HDI-Basis, BASF AG, NCO-Gehalt 22 Gew.%) als Stopper zugesetzt. Es wurde noch 3 h nachgerührt und anschließend das Lösemittel am Rotationsverdampfer entfernt. Das Reaktionsprodukt wies eine mittlere Funktionalität bezüglich NCO von ca. 13 auf.

1000g dieses NCO-Gruppen enthaltenden Reaktionsproduktes wurden in 1000 g trockenem Aceton gelöst. Anschließend wurde eine Mischung bestehend aus 47 g NaOH in 470 g Wasser und 105 g ß-Alanin in 235 g Aceton zugegeben, die Reaktionsmischung noch 30 min bei 40°C gerührt und anschließend das Lösemittelgemisch am Rotationsverdampfer im Vakuum entfernt. Der Rückstand wurde in Wasser gelöst und mit verdünnter Salzsäure neutralisiert, das ausgefallene Endprodukt abgesaugt und im Vakuum getrocknet.
Mittlere Molmasse calc.: 7248 g/mol
Mittlere Funktionalität: ca. 13 COOH

### Polymer 5: Hyperverzweigtes Polyurethan aus 2,4-Toluylendiisocyanat (TDI), Trimethylolpropan, 4,4'-Diphenylmethandiisocyanat (MDI) und Hydroxypivalinsäure, COOH-terminiert

400 g 2,4-TDI wurden unter Stickstoffbedeckung vorgelegt und unter gutem Rühren innerhalb 1 min 155 g TMP, gelöst in 555 g 2-Butanon, zugegeben. Nach Zudosierung von 0,2 g Dibutylzinndilaurat wurde die Reaktionsmischung bei 60°C gerührt und die Abnahme des NCO-Gehaltes titrimetrisch verfolgt. Bei Erreichen eines NCO-Gehaltes von 6,5 Gew.% wurden 94 g 4,4'-Diphenylmethandiisocyanat, gelöst in 94 g 2-Butanon, zugegeben und 3 h bei 60°C gerührt. Dann wurden 114 g Hydroxypivalinsäure, gelöst in 280 g 2-Butanon, und 0,1 g Dibutylzinndilaurat zugegeben, 8 h bei 60°C nachgerührt, und abschließend 100 g Methanol zugefügt. Das Lösemittelgemisch wurde am Rotationsverdampfer entfernt und das Produkt im Vakuum getrocknet.
Mittlere Molmasse calc.: 2723 g/mol
Mittlere Funktionalität: ca. 6 COOH

### Polymer 6: Hyperverzweigtes Polyurethan aus Hexamethylendiisocyanat (HDI), Dimethylolpropionsäure (DMPA) und Trimethylolpropän (TMP), COOH- und OH-terminiert

100 g HDI, gelöst in 250 g Dimethylacetamid (DMAc), wurden unter Stickstoffbedeckung vorgelegt. Anschliessend wurde unter gutem Rühren innerhalb von 1 min 79,7g Dimethylolpropionsäure, gelöst in 115g DMAc, zugegeben. Nach Zudosierung von 0,2 g Dibutylzinndilaurat wurde die Reaktionsmischung auf 70°C erwärmt und die Abnahme des NCO-Gehaltes titrimetrisch verfolgt. Bei Erreichen eines NCO-Gehaltes von 1,5 Gew.% wurden 13,5 g Trimethylolpropan, gelöst in 50 g DMAc zugesetzt und noch 1h bei 70°C nachgerührt. Anschließend wurde das Produkt am Rotationsverdampfer im Vakuum vom Lösemittel befreit.
Mittlere Molmasse calc.: 2793 g/mol
Mittlere Funktionalität: ca. 9 COOH und 3 OH

### Polymer 7: Hyperverzweigtes Polyurethan aus Isophorondiisocyanat (IPDI), Dimethylolpropionsäure (DMPA), Trimethylolpropan (TMP) und Polytetrahydrofuran, COOH- und OH-terminiert

222 g IPDI wurden unter Stickstoffbedeckung vorgelegt. Anschliessend wurde innerhalb 1 min die Mischung aus 67 g TMP und 67 g Dimethylolpropionsäure, gelöst in 356 g DMAc, unter gutem Rühren zugegeben. Nach Zudosierung von 0,4 g Dibutylzinndilaurat wurde die Reaktionsmischung auf 60°C erwärmt, bei dieser Temperatur gerührt und die Abnahme des NCO-Gehaltes titrimetrisch verfolgt. Bei Erreichen eines NCO-Gehaltes von 1,0 Gew.% wurden 32 g PolyTHF 250 (Polytetrahydrofuran, mittlere Molmasse 250 g/ mol, BASF AG) zugesetzt und 3 h bei 60°C nachgerührt. Während dieser Zeit sank der NCO-Gehalt der Mischung auf 0%. Das Produkt wurde anschließend am Rotationsverdampfer bei 60°C im Vakuum von Lösungsmittel befreit.
Mittlere Molmasse calc.: 4408 g/mol
Mittlere Funktionalität: ca. 6 COOH und 8 OH

### Polymer 8: Hyperverzweigtes Polyurethan aus Hexamethylendiisocyanat (HDI), Dimethylolpropionsäure (DMPA) und Trimethylolpropan (TMP), COOH- und OH-terminiert

400 g HDI wurden bei Raumtemperatur unter Stickstoffbedeckung vorgelegt. Anschließend wurde unter gutem Rühren innerhalb von 2 min eine Mischung aus 160 g Dimethylolpropionsäure, 160g Trimethylolpropan und 720 g DMAc zugegeben. Nach Zudosierung von 0,5 g Dibutylzinndilaurat wurde die Reaktionsmischung auf 70°C erwärmt und die Abnahme des NCO-Gehaltes titrimetrisch verfolgt. Bei Erreichen eines NCO-Gehaltes von 0,9 Gew.% wurden 100 g Methanol zugesetzt und noch 30 min bei 70°C nachgerührt. Anschließend wird das Produkt am Rotationsverdampfer im Vakuum vom Lösemittel befreit.
Mittlere Molmasse calc.: 2451 g/mol
Mittlere Funktionalität: ca. 4 COOH und 5 OH

### Polymer 9: Hyperverzweigtes Polyesteramid, HYBRANE H 1500, DSM N.V., OH-terminiert

Mittlere Molmasse calc.: 1500 g/mol
Mittlere Funktionalität: ca. 8 OH

### Erfindungsgemäße Druckfarben mit hyperverzweigten Polymeren

Die Qualität der erfindungsgemäßen Flüssigdruckfarben wurde anhand der Haftfestigkeit der Druckfarbe bestimmt.

Es wurde die Haftfestigkeit des Druckfarbenfilms auf verschiedenen Bedruckstoffen bestimmt.

### Beispiele 1 - 18

Bestimmung von Haftfestigkeiten der hyperverzweigte Polymere enthaltenden Druckfarbensysteme auf verschiedenen Bedruckstoffen im Vergleich zu einem Standard-System

### Messmethode Tesafestigkeit

Das Prüfverfahren "Tesafestigkeit" dient zur Bestimmung der Haftung eines Druckfarbenfilms auf dem Bedruckstoff.

### Herstellen der Proben

Die auf Druckviskosität verdünnte Farbe wird auf dem vorgeschriebenen Bedruckstoff angedruckt oder mit einem 6 µm-Rakel aufgezogen.

### Durchführung der Prüfung

Ein Tesabandstreifen (Klebeband mit 19 mm Breite (Artikel BDF 4104, Beiersdorf AG) wird auf den Druckfarbenfilm aufgeklebt, gleichmäßig angedrückt und nach 10 Sekunden wieder abgerissen. Dieser Vorgang wird auf derselben Stelle des Prüflings jeweils mit einem neuen Tesabandstreifen 4 mal wiederholt. Jeder Tesastreifen wird nacheinander auf ein weißes Papier, bei weißen Farben auf Schwarzpapier aufgeklebt. Die Prüfung erfolgt sofort nach Applikation der Farbe.

### Auswertung

Es erfolgt eine visuelle Prüfung der Oberfläche des Prüflings auf Beschädigung. Die Benotung erfolgt von 1 (sehr schlecht) bis 5 (sehr gut).

Für die Beispiele wurde folgende Standard-Rezeptur (Gew. Teile) gewählt:

| | |
|---|---|
| 70,0 | Pigment Präparation (BASF Drucksysteme) |
| 8,0 | Nitrocellulose (Wolf) |
| 1,0 | Oleamid (Croda) |
| 0,5 | PE-Wachse (BASF AG) |
| 2,0 | Dibutylphthalat (Brenntag) |
| 10,5 | Ethanol |
| 6,0* | Hyperverzweigtes Polymer als Co-Binder (gemäß Tabellen 1 und 2) |
| 2,0** | Titanchelat (Du Pont) |

| | |
|---|---|
| * = Das hyperverzeigte Polymer wurde als 75%ige Lösung in Ethanol zubereitet ** = Titanchelat wurde in der zweiten Versuchsreihe (Tabelle 2) weggelassen. | |

**Tabelle 1: Standard-Bindemittel im Vergleich zu hyperverzweigten Polymeren**

| Beispiel | Co-Binder | Bedruckstoff (Folie) | | |
|---|---|---|---|---|
| | | PP | PET Melinex 800 | PA Walomid XXL |
| 1 (Vergleich) | Standard-Polyurethan (PUR 7313, BASF) | 5 | 3 | 1 |
| 2 | Polymer 1 | 4 | 5 | 4,5 |
| 3 | Polymer 2 | 5 | 5 | 4,5 |
| 4 | Polymer 3 | 3,5 | 4,5 | 3,5 |
| 5 | Polymer 5 | 5 | 3 | 4 |
| 6 | Polymer 6 | 5 | 5 | 5 |
| 7 | Polymer 7 | 5 | 4 | 5 |
| 8 | Polymer 8 | 5 | 5 | 3 |
| 9 | Polymer 9 | 5 | 5 | 1 |

**Tabelle 2: Systeme ohne Titanchelat als Haftvermittler**

| Beispiel | Polymer | Bedruckstoff (Folie) | | |
|---|---|---|---|---|
| | | PP | PET Melinex 800 | PA Walomid XXL |
| 10 (Vergleich) | Standard-Polyurethan (PUR 7313, BASF) | 1 | 1 | 1 |
| 11 | Polymer 1 | 4 | 4,5 | 4,5 |
| 12 | Polymer 3 | 4 | 4,5 | 4 |
| 13 | Polymer 4 | 5 | 4,5 | 4,5 |
| 14 | Polymer 5 | 5 | 5 | 3 |
| 15 | Polymer 6 | 5 | 5 | 5 |
| 16 | Polymer 7 | 5 | 4 | 5 |
| 17 | Polymer 8 | 5 | 5 | 5 |
| 18 | Polymer 9 | 4 | 4,5 | 4,5 |

| | | | | |
|---|---|---|---|---|
| PP = Polypropylen PET = Polyethylenterephthalat PA = Polyamid | | | | |

Die Beispiele zeigen, dass die Haftung der erfindungsgemäßen Flüssigdruckfarbe auf verschiedenen Substraten erheblich besser ist, als bei Verwendung von konventionellen, nicht hyperverzweigten Polymeren als Bindemittel. Bei der Verwendung konventioneller Bindemittel muss ein Haftvermittler zwingend zugegeben werden, um zumindest in einigen Fällen brauchbare Ergebnisse erzielen zu können. Auf PA ist die Haftung trotz Haftvermittler unbefriedigend. Durch den Ersatz der konventionellen Bindemittel durch hyperverzweigte Polymere kann die Haftfestigkeit gesteigert werden. Besonders vorteilhaft kann auf Haftvermittler verzichtet werden. Mit hyperverzweigten Polymeren wird dennoch in allen Fällen eine hervorragende Haftung erzielt.

## Patentansprüche

1. Flüssigdruckfarbe für den Flexo- und/oder Tiefdruck, mindestens umfassend, jeweils bezogen auf die Summe aller Bestandteile, 50-80 Gew.% eines Lösemittels oder eines Gemischs verschiedener Lösemittel, 5-25 Gew.-% mindestens eines Farbmittels, 5-30 Gew.-% eines oder mehrerer Bindemittel sowie optional 0-20 Gew.-% weiterer Zusatzstoffe, **dadurch gekennzeichnet, dass** es sich bei mindestens einem der Bindemittel um ein molekular und strukturell uneinheitliches hyperverzweigtes Polymeres handelt, welches funktionelle Gruppen aufweist, ausgewählt aus hyperverzweigten Polyurethanen, hyperverzweigten Polyharnstoffpolyurethanen, hyperverzweigten Polyharnstoffen, hyperverzweigten Polyethern, hyperverzweigten Polyaminen, hyperverzweigten Polyamiden, hyperverzweigten Polyesteramiden und hyperverzweigten Polyetheramiden.

2. Flüssigdruckfarbe gemäß Anspruch 1, **dadurch gekennzeichnet, dass** es sich bei den funktionellen Gruppen des hyperverzweigten Polymeren um gleichartige oder verschiedenartige funktionelle Gruppen, ausgewählt aus der Gruppe von -COOH, -COOR, -CONHR, -CONH₂, -OH, -SH, -NH₂, -NHR, -NR₂, -SO₃H, - SO₃R, -NHCOOR, -NHCONH₂, - NHCONHR, wobei R ein gegebenenfalls substituierter geradekettiger oder verzweigter Alkylrest oder ein gegebenenfalls substituierter Arylrest ist, oder -falls möglich- um Salze dieser Gruppen handelt.

3. Flüssigdruckfarbe gemäß Anspruch 2, **dadurch gekennzeichnet, dass** es sich bei den funktionellen Gruppen um -OH und/oder -COOH handelt.

4. Flüssigdruckfarbe gemäß einem der Ansprüche 1 bis 3, **dadurch gekennzeichnet, dass** das hyperverzweigte Polymere im Mittel mindestens 4 funktionelle Gruppen aufweist.

5. Flüssigdruckfarbe gemäß Anspruch 4, **dadurch gekennzeichnet, dass** das hyperverzweigte Polymere 4 bis 30 funktionelle Gruppen aufweist.

6. Flüssigdruckfarbe gemäß einem der Ansprüche 1 bis 5, **dadurch gekennzeichnet, dass** das hyperverzweigte Polymere wasserlöslich oder wasserdispergierbar ist.

7. Drucklack zum Grundieren von unbedruckten oder Überlackieren von bedruckten Bedruckstoffen, mindestens umfassend ein Lösemittel oder ein Gemisch verschiedener Lösemittel,ausgewählt aus Xylol, Alkoholen, substituierten Alkoholen, Ethylacetat, Isopropylacetat, n-Propylacetat, n-Butylacetat und deren Gemischen, Wasser und Wasser enthaltenden Lösungsmittelgemischen, ein oder mehrere Bindemittel sowie optional weitere Zusatzstoffe, **dadurch gekennzeichnet, dass** es sich bei mindestens einem der Bindemittel um ein molekular und strukturell uneinheitliches hyperverzweigtes Polymeres handelt, welches funktionelle Gruppen aufweist.

8. Verwendung von funktionelle Gruppen aufweisenden molekular und strukturell uneinheitlichen hyperverzweigten Polymeren, ausgewählt aus hyperverzweigten Polyurethanen, hyperverzweigten Polyharnstoffpolyurethanen, hyperverzweigten Polyharnstoffen, hyperverzweigten Polyethern, hyperverzweigten Polyaminen, hyperverzweigten Polyamiden, hyperverzweigten Polyesteramiden und hyperverzweigten Polyetheramiden, zur Herstellung von Druckfarben. und Drucklacken.

9. Verwendung von hyperverzweigten Polymeren gemäß Anspruch 8, **dadurch gekennzeichnet, dass** das hyperverzweigte Polymere als Bindemittel eingesetzt wird.

10. Verwendung von hyperverzweigten Polymeren gemäß Anspruch 8 oder 9, **dadurch gekennzeichnet, dass** es sich bei den funktionellen Gruppen um gleichartige oder verschiedenartige funktionelle Gruppen, ausgewählt aus der Gruppe von -COOH, -COOR, -CONHR,-CONH₂, -OH, -SH, -NH₂, -NHR, -NR₂, -SO₃H, - SO₃R, -NHCOOR,-NHCONH₂, -NHCONHR, wobei R ein gegebenenfalls substituierter geradekettiger oder verzweigter Alkylrest oder ein gegebenenfalls substituierter Arylrest ist oder -falls möglich- um Salze dieser Gruppen handelt.

11. Flüssigdruckfarbe für den Flexo- und/oder Tiefdruck, mindestens umfassend, jeweils bezogen auf die Summe aller Bestandteile, 50-80 Gew.% eines Lösemittels oder eines Gemischs verschiedener Lösemittel, ausgewählt aus Kohlenwasserstoffen, Alkoholen, substituierten Alkoholen, Ethylacetat, Isopropylacetat, n-Propylacetat, n-Butylacetat und deren Gemischen, Wasser und Wasser enthaltenden Lösungsmittelgemischen, 5-25 Gew.-% mindestens eines Farbmittels, 5-30 Gew.-% eines oder mehrerer Bindemittel sowie optional 0-20 Gew.-% weiterer Zusatzstoffe, **dadurch gekennzeichnet, dass** es sich bei mindestens einem der Bindemittel um einen molekular und strukturell uneinheitlichen hyperverzweigten Polyester handelt, welcher funktionelle Gruppen aufweist.

12. Flüssigdruckfarbe gemäß Anspruch 11, **dadurch gekennzeichnet, dass** es sich bei den funktionellen Gruppen des hyperverzweigten Polyesters um gleichartige oder verschiedenartige funktionelle Gruppen, ausgewählt aus der Gruppe von -COOH, -COOR, -CONHR,-CONH₂, -OH, -SH, -NH₂, -NHR, -NR₂, -SO₃H, - SO₃R, -NHCOOR,-NHCONH₂, -NHCONHR, wobei R ein gegebenenfalls substituierter geradekettiger oder verzweigter Alkylrest oder ein gegebenenfalls substituierter Arylrest ist oder -falls möglich- um Salze dieser Gruppen handelt.

13. Flüssigdruckfarbe gemäß Anspruch 12, **dadurch gekennzeichnet, dass** es sich bei den funktionellen Gruppen um -OH und/oder -COOH handelt.

14. Flüssigdruckfarbe gemäß einem der Ansprüche 11 bis 13, **dadurch gekennzeichnet, dass** der hyperverzweigte Polyester im Mittel mindestens 4 funktionelle Gruppen aufweist.

15. Flüssigdruckfarbe gemäß Anspruch 14, **dadurch gekennzeichnet, dass** der hyperverzweigte Polyester 4 bis 30 funktionelle Gruppen aufweist.

16. Flüssigdruckfarbe gemäß einem der Ansprüche 11 bis 15, **dadurch gekennzeichnet, dass** der hyperverzweigte Polyester wasserlöslich oder wasserdispergierbar ist.

## Claims

1. A liquid printing ink for flexographic and/or gravure printing, at least comprising, based in each case on the sum of all constituents, 50-80% by weight of a solvent or of a mixture of different solvents, 5-25% by weight of at least one colorant, 5-30% by weight of one or more binders and optionally 0-20% by weight of further additives, wherein at least one of the binders is a molecularly and structurally nonuniform hyperbranched polymer which has functional groups selected from hyperbranched polyurethanes, hyperbranched polyurea polyurethanes, hyperbranched polyureas, hyperbranched polyethers, hyperbranched polyamines, hyperbranched polyamides, hyperbranched polyesteramides and hyperbranched polyetheramide.

2. The liquid printing ink according to claim 1, wherein the functional groups of the hyperbranched polymers are identical or different functional groups selected from the group consisting of -COOH, -COOR, -CONHR, -CONH2, -OH, -SH, -NH2, -NHR, -NR2, -S03H, - S03R, -NHCOOR, -NHCONH2, and -NHCONHR, where R is an optionally substituted straight-chain or branched alkyl radical or an optionally substituted aryl radical, or, if possible, are salts of these groups.

3. The liquid printing ink according to claim 2, wherein the functional groups are -OH and/or -COOH.

4. The liquid printing ink according to any of claims 1 to 3, wherein the hyperbranched polymer has on average at least 4 functional groups.

5. The liquid printing ink according to claim 4, wherein the hyperbranched polymer has from 4 to 30 functional groups.

6. The liquid printing ink according to any of claims 1 to 5, wherein the hyperbranched polymer is water-soluble or water-dispersible.

7. A printing lacquer for priming unprinted print media or overcoating printed print media, at least comprising a solvent or a mixture of different solvents, selected from xylene, alcohols, substituted alcohols, ethyl, acetate, isopropyl acetate, n-propyl acetate, n-butyl acetate and mixtures thereof, water and solvent mixtures comprising water, one or more binders and optionally further additives, wherein at least one of the binders is a molecularly and structurally nonuniform hyperbranched polymer which has functional groups.

8. The use of molecularly and structurally nonuniform hyperbranched polymers having functional groups selected from hyperbranched polyurethanes, hyperbranched polyurea polyurethanes, hyperbranched polyureas, hyperbranched polyethers, hyperbranched polyamines, hyperbranched polyamides, hyperbranched polyesteramides and hyperbranched polyetheramide, for the preparation of printing inks and printing lacquers.

9. The use of hyperbranched polymers according to claim 8, wherein the hyperbranched polymer is used as a binder.

10. The use of hyperbranched polymers according to claim 8 or 9, wherein the functional groups are identical or different functional groups selected from the group consisting of -COOH, -COOR, -CONHR, -CONH2, -OH, -SH, -NH2, -NHR, -NR2, -S03H, -S03R, -NHCOOR, -NHCONH2, and -NHCONHR, where R is an optionally substituted straight-chain or branched alkyl radical or an optionally substituted aryl radical, or, if possible, are salts of these groups.

11. A liquid printing ink for flexographic and/or gravure printing, at least comprising, based in each case on the sum of all the constituents, 50-80% by weight of a solvent or of a mixture of different solvents selected from hydrocarbons, alcohols, substituted alcohols, ethyl acetate, isopropyl acetate, n-propyl acetate, n-butyl acetate and mixtures thereof, water and solvent mixtures comprising water, 5-25% by weight of at least one colorant, 5-30% by weight of one or more binders and optionally 0-20% by weight of further additives, wherein at least one of the binders is a molecularly and structurally nonuniform hyperbranched polyester which has functional groups.

12. The liquid printing ink according to claim 11, wherein the functional groups of the hyperbranched polyester are identical or different functional groups selected from the group consisting of -COOH, -COOR, -CONHR, -CONH2, -OH, -SH, -NH2, -NHR, -NR2, -S03H, - S03R, -NHCOOR, -NHCONH2, and -NHCONHR, where R is an optionally substituted straight-chain or branched alkyl radical or an optionally substituted aryl radical, or, if possible, are salts of these groups.

13. The liquid printing ink according to claim 12, wherein the functional groups are -OH and/or -COOH.

14. The liquid printing ink according to any of claims 11 to 13, wherein the hyperbranched polyester has on average at least 4 functional groups.

15. The liquid printing ink according to claim 14, wherein the hyperbranched polyester has from 4 to 30 functional groups.

16. The liquid printing ink according to any of claims 11 to 15, wherein the hyperbranched polyester is water-soluble or water-dispersible.

## Revendications

1. Encre d'imprimerie liquide pour la flexographie et/ou l'héliogravure comprenant au moins, à chaque fois par rapport à la somme de tous les constituants, 50-80% en poids d'un solvant ou d'un mélange de différents solvants, 5-25% en poids d'au moins un colorant, 5-30% en poids d'un ou de plusieurs liants ainsi qu'éventuellement 0-20% en poids d'autres additifs, **caractérisée en ce qu'**il s'agit, pour au moins un des liants, d'un polymère hyperramifié, non uniforme sur le plan moléculaire et structural, qui présente des groupes fonctionnels, choisi parmi les polyuréthanes hyperramifiés, les polyurée-polyuréthanes hyperramifiés, les polyurées hyperramifiées, les polyéthers hyperramifiés, les polyamines hyperramifiées, les polyamides hyperramifiés, les polyesteramides hyperramifiés et les polyétheramides hyperramifiés.

2. Encre d'imprimerie liquide selon la revendication 1, **caractérisée en ce qu'**il s'agit, pour les groupes fonctionnels du polymère hyperramifié, de groupes fonctionnels similaires ou différents, choisis dans le groupe formé par -COOH, -COOR, -CONHR, -CONH₂, -OH, -SH, -NH₂, -NHR, -NR₂, -SO₃H, -SO₃R, -NHCOOR, -NHCONH₂, -NHCONHR, R représentant un radical alkyle linéaire ou ramifié, le cas échéant substitué, ou un radical aryle le cas échéant substitué, ou - lorsque cela est possible - d'un sel de ces groupes.

3. Encre d'imprimerie liquide selon la revendication 2, **caractérisée en ce qu'**il s'agit, pour les groupes fonctionnels, de -OH et/ou de -COOH.

4. Encre d'imprimerie liquide selon l'une quelconque des revendications 1 à 3, **caractérisée en ce que** le polymère hyperramifié présente en moyenne au moins 4 groupes fonctionnels.

5. Encre d'imprimerie liquide selon la revendication 4, **caractérisée en ce que** le polymère hyperramifié présente 4 à 30 groupes fonctionnels.

6. Encre d'imprimerie liquide selon l'une quelconque des revendications 1 à 5, **caractérisée en ce que** le polymère hyperramifié est soluble ou dispersible dans l'eau.

7. Encre d'imprimerie pour l'apprêt de supports d'impression non imprimés ou le recouvrement de supports d'impression imprimés, comprenant au moins un solvant ou un mélange de différents solvants, choisi(s) parmi le xylène, les alcools, les alcools substitués, l'acétate d'éthyle, l'acétate d'isopropyle, l'acétate de n-propyle, l'acétate de n-butyle et leurs mélanges, l'eau et les mélanges de solvants contenant de l'eau, un ou plusieurs liants ainsi qu'éventuellement d'autres additifs, **caractérisée en ce qu'**il s'agit, pour au moins un des liants, d'un polymère hyperramifié, non uniforme sur le plan moléculaire et structural, qui présente des groupes fonctionnels.

8. Utilisation de polymères hyperramifiés, non uniformes sur le plan moléculaire et structural, présentant des groupes fonctionnels, choisis parmi les polyuréthanes hyperramifiés, les polyurée-polyuréthanes hyperramifiés, les polyurées hyperramifiées, les polyéthers hyperramifiés, les polyamines hyperramifiées, les polyamides hyperramifiés, les polyesteramides hyperramifiés et les polyétheramides hyperramifiés pour la préparation d'encres d'imprimerie et de laques d'imprimerie.

9. Utilisation de polymères hyperramifiés selon la revendication 8, **caractérisée en ce que** le polymère hyperramifié est utilisé comme liant.

10. Utilisation de polymères hyperramifiés selon la revendication 8 ou 9, **caractérisée en ce qu'**il s'agit, pour les groupes fonctionnels, de groupes fonctionnels similaires ou différents, choisis dans le groupe formé par -COOH, -COOR, -CONHR, -CONH₂, -OH, -SH, -NH₂, -NHR, -NR₂, -SO₃H, -SO₃R, -NHCOOR, -NHCONH₂, -NHCONHR, R représentant un radical alkyle linéaire ou ramifié, le cas échéant substitué, ou un radical aryle le cas échéant substitué, ou - lorsque cela est possible - d'un sel de ces groupes.

11. Encre d'imprimerie liquide pour la flexographie et/ou l'héliogravure comprenant au moins, à chaque fois par rapport à la somme de tous les constituants, 50-80% en poids d'un solvant ou d'un mélange de différents solvants, choisi(s) parmi les hydrocarbures, les alcools, les alcools substitués, l'acétate d'éthyle, l'acétate d'isopropyle, l'acétate de n-propyle, l'acétate de n-butyle et leurs mélanges, l'eau et les mélanges de solvants contenant de l'eau, 5-25% en poids d'au moins un colorant, 5-30% en poids d'un ou de plusieurs liants ainsi qu'éventuellement 0-20% en poids d'autres additifs, **caractérisée en ce qu'**il s'agit, pour au moins un des liants, d'un polyester hyperramifié, non uniforme sur le plan moléculaire et structural, qui présente des groupes fonctionnels.

12. Encre d'imprimerie liquide selon la revendication 11, **caractérisée en ce qu'**il s'agit, pour les groupes fonctionnels du polyester hyperramifié, de groupes fonctionnels similaires ou différents, choisis dans le groupe formé par -COOH, -COOR, -CONHR, -CONH₂, -OH, -SH, -NH₂, -NHR, -NR₂, -SO₃H, -SO₃R, -NHCOOR, -NHCONH₂, -NHCONHR, R représentant un radical alkyle linéaire ou ramifié, le cas échéant substitué, ou un radical aryle le cas échéant substitué, ou - lorsque cela est possible - d'un sel de ces groupes.

13. Encre d'imprimerie liquide selon la revendication 12, **caractérisée en ce qu'**il s'agit, pour les groupes fonctionnels, de -OH et/ou de -COOH.

14. Encre d'imprimerie liquide selon l'une quelconque des revendications 11 à 13, **caractérisée en ce que** le polyester hyperramifié présente en moyenne au moins 4 groupes fonctionnels.

15. Encre d'imprimerie liquide selon la revendication 14, **caractérisée en ce que** le polyester hyperramifié présente 4 à 30 groupes fonctionnels.

16. Encre d'imprimerie liquide selon l'une quelconque des revendications 11 à 15, **caractérisée en ce que** le polyester hyperramifié est soluble ou dispersible dans l'eau.
